# EUROPEAN PATENT APPLICATION

(11) **EP 1 669 993 A1**
(43) Date of publication of application: **14.06.2006**
(21) Application number: 03818818.1
(22) Date of filing: 30.09.2003
(51) Int. Cl.: G11B 20/10, H04H 1/00, H04N 1/387

(54) **DIGITAL WATERMARK INFORMATION ADDING DEVICE, DATA REPRODUCTION DEVICE AND DATA RECORDING DEVICE**

(71) Applicant: Kabushiki Kaisha Kenwood, Hachiouji-shi, Tokyo 192-8525 (JP)
(72) Inventor: FURUKAWA, Masamichi, Hachiouji-shi, Tokyo 192-0045 (JP); SONODA, Yoshio, Sagamihara-shi, Kanagawa 114-0351 (JP)
(74) Representative: Leinweber & Zimmermann
(86) International application number: PCT/JP2003/012528
(87) International publication number: WO 2005/034119

(57) **Abstract**

In order to prevent content data from being illegally recorded or reproduced, information for detecting that the content data is illegally distributed or recorded is added to watermark information or other information. Two sets of WM (watermark) data, a WM1 data set and a WM2 data set are prepared. For the WM1 data, data representing that the content data is package media data or distribution data, SCMS information, data representing that the content data is recorded in a disk or a semiconductor memory, and data representing the type of disk or semiconductor memory are set. For the WM2 data, the distribution time or the year and date is set as time information representing time when the content data is recorded. According to the WM1 or WM2 data, a data reproducing device (1) controls reproduction most suitably as copyright holder' s intention.

## Description

### Technical Field

The present invention relates to a digital watermark information adding device for adding digital watermark information to the content data, a data reproduction device for reproducing the content data, and a data recording device for recording the content data.

### Background Art

In recent years, the music, image or document contents have circulated as digital data, and a service called an EMD (Electronic Music Distribution) has started. Along with this, the copyright protection for content data is an important subject, and various methods have been proposed.

In an SCMS (Serial Copy Management System) as a copyright management method useful for the CD, SCMS information is added to digital music data recorded in the CD (Compact Disk) sold in package. This SCMS information imposes a restriction on the copy of digital data, in which only one generation copy is permitted principally. When the digital music data is copied from CD to MD (Mini Disk) employing an audio apparatus that can reproduce and record the digital music data, the content provider requests that only one generation digital copy is permitted and the digital copy for two or more generations is disabled.

Further, there was a method for adding specific data to the content data, employing a technique called a "Digital Water Mark". This method involves recording the information concerning the copyright in a content signal itself, and is suitable for recording the copyright information in the respect that it is very difficult to remove or falsify that information.

However, lately, the digital content data is processed by a personal computer, and the content data including SCMS information might be copied. In this case, there was a problem that the one generation copy was always permitted by the SCMS information, and the copy was not substantially restricted.

Thus, a method for rewriting the digital watermark data for each digital copy when the copyright information such as SCMS information is added using a digital watermark technique has been proposed. However, the currently proposed method had a problem that it was impossible to detect whether or not the content data was illegally distributed over the network.

Though there is a method for preventing illegal use of the content data by encrypting the content data for authentication, there was no means for preventing the illegal distribution of the decrypted content data, when distributed over the network.

The content industrial side of providing the content apprehends that the illegal copy may be unlimitedly repeated in the digital environment, and the copied content rapidly distributed, and demands the rapid preparation for a copyright protection technology.

If the copyright protection technology is not prepared, the content business may not be set up, and as a typical example of illegal distribution, there is an illegal distribution of content using the Internet.

However, in consideration of the user's availability, the copy of the content once purchased may be permitted within home or for personal use, and for instance, for the content distributed by broadcasting, the recording of time shift may be permitted in consideration of viewing the charged broadcasting.

That is, with the copyright protection technology required in the content business, there is a need for a contradictory function in which the illegal distribution is suppressed, but a restriction on personal use is permitted, though any technology for solving this function has not been offered.

In the current circumstances, when someone uploads the content for which the copyright holder would like a copy restriction to the home page, the person who downloads this content can freely record it in a CD-R (Compact Disk Recordable). This recorded content can be freely reproduced or recorded, and the copy can be used free around the world.

That is, if the content is downloaded from the home page employing the Internet, a large number of illegal copies are inundated, so that the content business is not set up.

The reason why illegal copy can not be prevented in the current circumstances is that the content data recorded through the network and the content data of one generation recorded in a reproduction device by the person as conventionally allowed can not be distinguished. That is, if the network distribution is prevented, the normal recording by the person ought to be also prohibited.

### Summary of the Invention

It is an object of the present invention to provide a service environment of content data as copyright holder's intention by detecting the first generation recorded data based on the information, and detecting the content distributed via a network, which was impossible before, and by preventing the content data from being illegally recorded or distributed.

In order to accomplish the above object, in a first aspect according to the invention, there is provided a digital watermark information adding device having digital watermark information adding means for adding digital watermark information to broadcast content data, wherein the digital watermark information adding means adds time information representing the broadcasting time of the content data as digital watermark information to the content data to judge whether or not a terminal receiving the content data can record the content data.

Also, in a second aspect according to the invention, there is provided a digital watermark information adding device having digital watermark information adding means for adding digital watermark information to broadcast content data, wherein if the content data is redistributed via a network, the digital watermark information adding means adds time information representing the broadcasting time of the content data as digital watermark information to the content data, to allow a terminal receiving the content data to judge whether or not the received content data is the content data permitted to record, or the normal content data.

Moreover, in the digital watermark information adding device of an embodiment according to the invention, it is effective that the digital watermark information adding means adds digital watermark information representing that the content insists the copyright to the content data.

Moreover, in the digital watermark information adding device of an embodiment according to the invention, it is effective that the digital watermark information adding means adds digital watermark information representing whether or not the broadcast content data is permitted to be distributed via a communication line.

In a third aspect according to the invention, there is provided a data reproduction device for reproducing content data recorded in a recording medium, comprising time information presence or absence discrimination means for discriminating whether or not time information is added to the recording medium, recording medium type discrimination means for discriminating whether the recording medium is read-only recording medium or recordable recording medium, clocking means for clocking the present time, time information adding means for adding time information clocked by the clocking means to the reproduced content data, and output means for outputting the content data, wherein if the time information presence or absence discrimination means discriminates that the time information is not recorded, and the recording medium type discrimination means discriminates that the recording medium is read-only recording medium, the time information clocked by the clocking means is added to the reproduced content data and the content data is outputted from the output means.

Moreover, in the data reproduction device of an embodiment according to the invention, it is effective to further comprise copyright insistence information discrimination means for discriminating whether or not the information representing the insistence of the copyright or other equivalent information is added to the content data, wherein if the time information presence or absence discrimination means discriminates that the time information is not recorded, the recording medium type discrimination means discriminates that the recording medium is read-only recording medium, and the copyright insistence information discrimination means discriminates that the information representing the insistence of the copyright is not added; the time information is not added to the reproduced content data and the content data is outputted from the output means, because the content is interpreted as copy free without restrictions on the recording or reproduction.

Moreover, in the data reproduction device of an embodiment according to the invention, it is effective that if the time information presence or absence discrimination means discriminates that the time information is not recorded, and the recording medium type discrimination means discriminates that the recording medium is recordable recording medium, the time information is not added to the reproduced content data and the content data is outputted from the output means, to attain compatibility because the content data is interpreted as conventionally circulating content.

Moreover, in the data reproduction device of an embodiment according to the invention, it is effective to further comprise copyright insistence information discrimination means for discriminating whether or not the information representing the insistence of the copyright or other equivalent information is added to the content data, wherein if the time information presence or absence discrimination means discriminates that the time information is not recorded, the recording medium type discrimination means discriminates that the recording medium is read-only recording medium, and the copyright insistence information discrimination means discriminates that the information representing the insistence of the copyright or other equivalent information is added, the time information clocked by the clocking means is added to the reproduced content data and the content data is outputted from the output means, because the recording medium is judged as a trade disk requiring the copyright protection.

Moreover, in the data reproduction device of an embodiment according to the invention, it is effective to further comprise copyright insistence information discrimination means for discriminating whether or not the information representing the insistence of the copyright or other equivalent information is added to the content data, wherein if the time information presence or absence discrimination means discriminates that the time information is not recorded, the recording medium type discrimination means discriminates that the recording medium is recordable recording medium, and the copyright insistence information discrimination means discriminates that the information representing the insistence of the copyright is added, the reproduction of the content data is prohibited, because the content is recorded by a device that does not cope with a content protection system of the invention.

Moreover, in the data reproduction device of an embodiment according to the invention, it is effective to further comprise copyright insistence information discrimination means for discriminating whether or not the information representing the insistence of the copyright or other equivalent information is added to the content data, wherein if the time information presence or absence discrimination means discriminates that the time information is not recorded, the recording medium type discrimination means discriminates that the recording medium is recordable recording medium, and the copyright insistence information discrimination means discriminates that the information representing the insistence of the copyright is not added, the time information is not added to the reproduced content data and the content data is outputted from the output means, because it is judged that the data of recording the copy free content is reproduced.

Moreover, in the data reproduction device of an embodiment according to the invention, it is effective that if the time information presence or absence discrimination means discriminates that the time information is recorded, the new time information is not added to the reproduced content data and the content data is outputted from the output means while the time information recorded in the disk is entirely left, because it is interpreted that the already once recorded content is reproduced.

Moreover, in the data reproduction device of an embodiment according to the invention, it is effective that the time information is added as digital watermark information, because the falsification is difficult.

Moreover, in the data reproduction device of an embodiment according to the invention, it is effective that the information representing the insistence of the copyright or other equivalent information is added as digital watermark information.

Moreover, in the data reproduction device of an embodiment according to the invention, it is effective that the clocking means clocks the year, month and day, and the time information includes only the year, month and day.

Moreover, in the data reproduction device of an embodiment according to the invention, it is effective that the time information adding means adds the year, month and day to the reproduced content data in the order of day, month and year.

This is intended to shorten the time up to detection if possible by dividing the time data in units of day, month and year and recording the data of shorter term earlier, because it may take about a few seconds to read the digital watermark information. Generally, when the date is different, it is considered that the day is most often different probabilistically or in actual operation, the conclusion is more rapidly drawn by comparing from this data of day.

Moreover, in the data reproduction device of an embodiment according to the invention, it is effective that the clocking means imposes a restriction on the settable number of time clock.

In a fourth aspect according to the invention, there is provided a data recording device for recording the input content data, comprising time information identification means for identifying the time information added to the content data, clocking means for clocking the present time, and recording means for recording the content data in a recording medium, wherein if it is discriminated that the time information is added to the content data, and the time information identified by the time information identification means and the present time clocked by the clocking means are matched within a predetermined range, the input content data is recorded in the recording medium, because it is interpreted that the input content data is reproduced at present and the content is never copied.

Moreover, in the data recording device of an embodiment according to the invention, it is effective that if it is discriminated that the time information is added to the content data, and the identified time information and the present time clocked by the clocking means are unmatched within a predetermined range, recording the input content data in the recording medium is prohibited, because it is judged that the input content data has been already once recorded or distributed via the network.

Moreover, in the data recording device of an embodiment according to the invention, it is effective to further comprise copyright insistence information discrimination means for discriminating whether or not the information representing the insistence of the copyright or other equivalent information is added to the content data, wherein if it is discriminated that the time information is not added to the content data, and it is discriminated that the information representing the insistence of the copyright or other equivalent information is added, recording the input content data in the recording medium is prohibited, because it is interpreted that the input content data is recorded or reproduced by a device that does not cope with the copyright protection system of the invention.

Moreover, in the data recording device of an embodiment according to the invention, it is effective to further comprise copyright insistence information discrimination means for discriminating whether or not the information representing the insistence of the copyright or other equivalent information is added to the content data, wherein if it is discriminated that the time information is not added to the content data, and it is discriminated that the information representing the insistence of the copyright or other equivalent information is not added, the input content data is recorded in the recording medium, because it is interpreted that the input content data does not require the copy restriction.

Moreover, in the data recording device of an embodiment according to the invention, it is effective that the time information is added as digital watermark information that is difficult to falsify.

Moreover, in the data recording device of an embodiment according to the invention, it is effective that the information representing the insistence of the copyright or other equivalent information is added as digital watermark information that is difficult to falsify.

Moreover, in the data recording device of an embodiment according to the invention, it is effective that the clocking means is able to set the time clock only when the data recording device is manufactured.

Moreover, in the data recording device of an embodiment according to the invention, it is effective that the clocking means clocks the year, month and day, and the time information includes only the year, month and day.

Moreover, in the data recording device of an embodiment according to the invention, it is effective that the clocking means imposes a restriction on the settable number of time clock.

### Brief Description of the Drawings

Figure 1 is a block diagram showing the configuration of a data reproduction device 1 according to one embodiment of the present invention;
Figure 2 is a block diagram showing the configuration of a data recording device 2 according to one embodiment of the invention;
Figure 3 is a flowchart showing a data reproduction process. 1 that is performed by a reproduction control section 106 of Figure 1;
Figure 4 is a flowchart showing a data reproduction process 2 that is performed by the reproduction control section 106 of Figure 1; and
Figure 5 is a flowchart showing a data recording process that is performed by a recording control section 206 of Figure 2.

### Detailed Description of Invention

The preferred embodiments of the present invention will be described below with reference to the drawings.

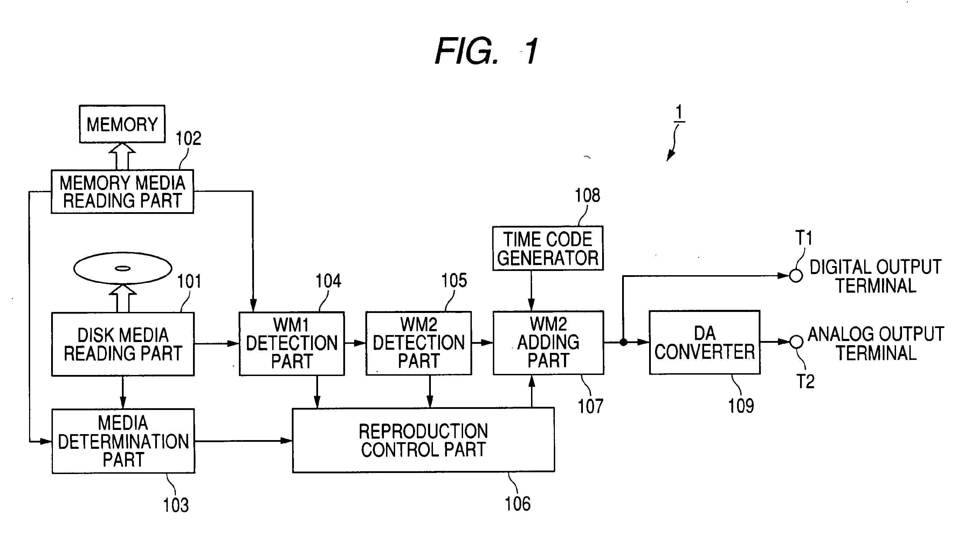

In the following embodiments, the WM data corresponds to digital watermark information as defined in the claims. Figures 1 to 5 are views showing the data reproduction device and the data recording device according to one embodiment.

First of all, the configuration will be described below:

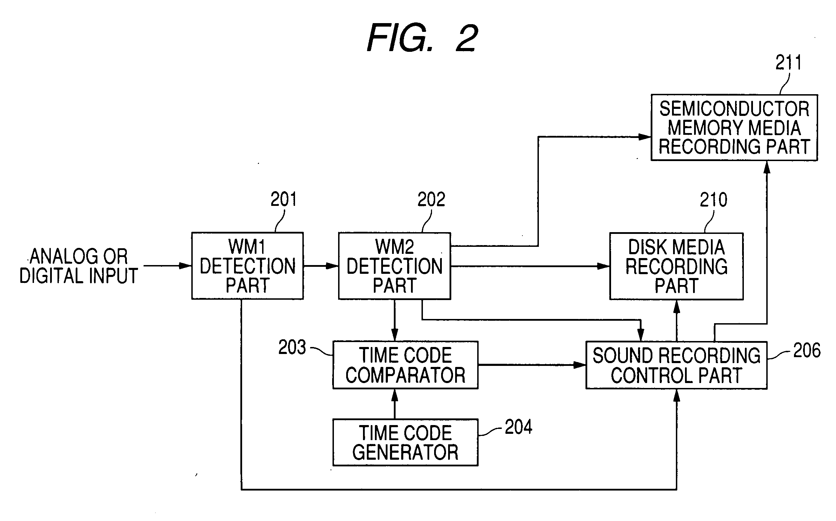

Figure 1 is a block diagram showing the functional configuration of a data reproduction device 1 according to this embodiment. Figure 2 is a block diagram showing the functional configuration of a data recording,device 2 according to this embodiment.

The data reproduction device 1 drives the disk media such as a CD (Compact Disk) or a DVD (Digital Versatile Disc), or the semiconductor memory media containing a semiconductor memory, and reads data recorded in various kinds of media. Also, the data recording device 2 records data in various kinds of media. The media available for the data reproduction device 1 and the data recording device 2 is not specifically limited, but the other media similar to the above media or put to practical use in the future may be naturally applicable.

Herein, the data reproduced or recorded in this embodiment will be described below.

In this embodiment, an example of reproducing and recording the digital music data as the content data is given. Conventionally, data called an-SCMS (Serial Copy Management System) is added to the digital music data recorded in the CD sold in package. Table 1 shows the configuration of SCMS information.

**Table 1: Contents of SCMS information**

| | |
|---|---|
| 00 | Copy free (No restriction of copy) |
| 10 | One Generation Copy Permitted (Copy is permitted for only one generation) |
| 11 | No More Copy (Copy is prohibited) |

As shown in Table 1, the SCMS information is composed of 2 bits, and three restrictions are put on the copy of digital music data.

For instance, the SCMS information "00" indicates the "Copy Free", namely, that there is no restriction on the copy. Also, the SCMS information "10" indicates the "One Generation Copy Permitted", namely, that the copy is permitted for only one generation. The SCMS information "11" indicates the "No More Copy", namely, that the copy is prohibited.

Accordingly, when the SCMS information "10" is added to the digital music data, the digital music data can be copied as digital data for only one generation. For instance, the user who purchased a CD sold in package can record the digital music data recorded on the CD in the disk media such as a CD-R or a CD-RW or the semiconductor memory media, but is not permitted to digital copy the digital music data from the disk media or semiconductor memory media to the other media.

In the digital music data recorded on the CD sold in package, electronic data insisting the copyright is added as a copyright information bit of one bit in a signal bit string, but may be displayed by inserting specific data as digital watermark information difficult to falsify. In the case of CD, the SCMS information of "00" corresponds to the state where one bit of the copyright information is "1", and the SCMS information of "10" corresponds to the state where one bit of the copyright information is "0".

Also, the SCMS information of "11" corresponds to the state where one bit of the copyright information is alternately 1 and 0 at a period of about one second.

Such a complicated structure is made because an idea of the SCMS is settled when the digital audio tape recorder DAT appears on the market after the CD is sold.

In the case of the DAT, two bits are firstly assigned as the copyright information, whereby the intrinsic bit structure of the SCMS is adopted. That is, the SCMS information includes both the information insisting the copyright and the information indicating the copy generation.

Similarly, when the SCMS information "00" is added to the digital music data, the digital music data is the copy free content that is permitted to be freely digitally copied, while when the SCMS information "11" is added to the digital music data, the digital music data is the already once copied content that is not permitted to be digitally copied. The apparatus that can digitally copy the digital music data available on the market at present operates under the restrictions of the SCMS information.

Further, in this embodiment, it is assumed that the WM (Watermark) recorded in the digital music data that is distributed, reproduced or recorded has two kinds of data of N bits embedded. This N-bit data is hereinafter referred to as "WM1 data, WM2 data", and the configurations of WM1 data and WM2 data are shown in Table 2 and 3.

**Table 2 Bit configuration of WM1 data**

| | | |
|---|---|---|
| First bit | 0 | Package media data |
| | 1 | Distribution data |
| Second and third bits | 00 | Copy free (No restriction of copy) |
| | 10 | One Generation Copy Permitted (Copy is permitted for only one generation) |
| | 11 | No More Copy (Copy is prohibited) |
| Fourth bit | 0 | Disk media identification data |
| | 1 | Memory media identification data |
| Fifth to Eighth bits | 0000-1111 | Disk media content identification data (corresponding to 16 kinds of disk media) |
| | 0000-1111 | Memory media content identification data (corresponding to 16 kinds of memory media) |

As shown in Table 2, the WM1 data composed of 8 bits is identified by dividing the data content into "first bit", "second and third bits", "fourth bit" and "fifth to eighth bits" from the beginning.

The first bit indicates that the digital music data with the WM1 data embedded is package media data such as CD sold in package at the shop or distribution data distributed in the EMD (Electronic Music Distribution) services. More specifically, if the first bit is "0", the digital music data with the WM1 data embedded is the package media data, or if the first bit is "1", the distribution data of digital music data with the WM1 data embedded is the distribution data.

Herein, the distribution data is digital music data permitted to distribute by the EMD and normally produced, and consists of the normal digital music data with the WM1 data embedded by a normally authenticated distribution apparatus. Accordingly, all the digital music data distributed via the communication network is not necessarily the distribution data.

Also, the data of the second and third bits as shown in Table 2 is a combination of two bits, indicating three restrictions on the copy of digital music data.

For instance, if data of the second and third bits is "00", "Copy Free", namely, no restriction of copy is indicated. Also, if data of the second and third bits is "10", "One Generation Copy Permitted", namely, the copy permitted for only one generation is indicated. If data of the second' and third bits is "11", "No More Copy", namely, the copy prohibited is indicated.

Also, data of the fourth bit as shown in Table 2 is the data for identifying whether the kind of package media where the digital music data is recorded is disk media or semiconductor memory media. If data of the fourth bit is "0", the disk media is indicated, or if it is "1", the semiconductor memory media is indicated.

Also, data of the fifth to eighth bits as shown in Table 2 is a combination of four bits, indicating the content of package media where the digital music data is recorded by identifying whether the media is reproduction type media or recording type media, following the kind of media as indicated by the fourth bit.

For instance, the fourth bit of "0" indicates the disk media, which is CD-ROM (Compact Disk Read Only Memory) if data of the fifth to eighth bits is "0000", CD-DA (Compact Disc Digital Audio) if it is "0001", CD-R (Compact Disk Recordable) if it is "0010", CD-RW (Compact Disk ReWritable) if it is "0011", DVD-ROM (Digital Versatile Disk Read Only Memory) if it is "0100", and DVD-R (Digital Versatile Disk Recordable) if it is "0101". The content of disk media is indicated by four bits, whereby 16 kinds of disk media at maximum can be identified.

Also, for instance, the fourth bit of "1" indicates the semiconductor memory, which is CF (Compact Flash) memory if data of the fifth to eighth bits is "0000", and SD (Secure Digital) memory if it is "0001". The content of semiconductor memory media is indicated by four bits, whereby 16 kinds of semiconductor memory media at maximum can be identified.

Accordingly, the digital music data with WM1 data "01000000" embedded is identified as CD-ROM in which the data is recorded in the package media and can be copied as digital data for only one generation.

In this manner, the WM1 data of 8 bits consists of a type of digital music data, a restriction on the digital copy as defined for the digital music data, and data indicating the kind and content of the media.

The configuration of WM1 data is not limited to 8 bits as shown in Table 2, but of course, the number of bits or data allocation content may be appropriately changed in accordance with various distribution methods or media.

**Table 3: Bit configuration of WM2 data**

| | | |
|---|---|---|
| First to Eighth bits | 00000000-11111111 | Year data |
| Ninth to Ninth to bits Twelfth bits | 0000-1111 | Month data |
| Thirteenth to seventeenth bits | 00000-11111 | Day data |

The WM2 data of 17 bits is identified by dividing the data content into the "first to eighth bits", the "ninth to twelfth bits" and the "thirteenth to seventeenth bits" from the beginning, as shown in Table 3. This WM2 data is the data for indicating the distribution time at the time of distributing data or the recording time at the time of recording media as time information "year, month, day".

The data of the first to eighth bits indicates the "year" of time information, in which the year data corresponding to 256 years is settable by 8 bits. This dictates that the term of validity of the copyright at present is not extended beyond that period hereafter.

The data of the ninth to twelfth bits indicates the "month" of time information, in which January to December are settable by 4 bits. Also, the data of the thirteenth to seventeenth bits indicates the "day" of time information, in which first to thirty first are settable by 5 bits. These data may be represented in a BCD code, in which the number of bits is naturally different.

In this embodiment, the WM2 data is recorded in the digital music data at the timing when data is distributed, when the package media is manufactured, or when the digital music data read from the package media in the data reproduction device 1 is reproduced and outputted with the WM2 data added, as will be detailed later in the explanation of the operation.

Also, the configuration of WM2 data is not limited to 17 bits as shown in Table 3, and of course, the number of bits or the data allocation content may be appropriately changed in accordance with various use forms of digital music data. For instance, the time information of hour, minute and second may be added.

The WM1 and WM2 data are embedded into the digital music data by a so-called "Digital Water Mark (digital watermark)" technology, and recorded to disable the general consumer to record or alter it. A typical recording technique of recording this Digital Water Mark in the digital music data may be applied.

For the digital music data normally distributed by the broadcasting media or contents distribution media, data "1" is set at the first bit, and the data according to an intention of the copyright holder are set at the second and third bits. When the distribution data is used from the disk media or semiconductor memory media where original data is recorded, the WM1 data in which corresponding data is set is embedded at the fourth to eighth bits, and the WM2 data in which time information indicating the distribution time is set is embedded, whereafter the digital music data is distributed to the data reproduction device 1 or the data recording device 2 via the broadcasting station, network or corresponding receiving apparatus.

Also, for the digital music data recorded in the package media and normally circulated, data "0" is set at the first bit, and the data according to an intention of the copyright holder are set at the second to eighth bits, so that the reproduction process of the data reproduction device 1 and the recording process of the data recording device 2 may be controllable.

As shown in Figure 1, the data reproduction device 1 comprises a disk media reading section 101, a semiconductor memory media reading section 102, a media judging section 103, a WM1 detecting section 104, a WM2 detecting section 105, a reproduction control section 106, a WM2 adding section 107, a time code generator 108, and a DA converter 109.

The disk media reading section 101 reads the digital music data from the disk media (various kinds of CD or DVD) in which digital music data is recorded, and outputs the read digital music data to the media judging section 103 and the WM1 detecting section 104.

The semiconductor memory media reading section 102 reads the digital music data from the semiconductor memory media (various memory cards of CF memory or SD memory) in which digital music data is recorded, and outputs the read digital music data to the media judging section 103 and the WM1 detecting section 104.

The media judging section 103 analyzes the set content of the WM1 data, and judges whether or not the disk media or semiconductor memory media in which the digital music data is recorded is reproduction type media or recording type media to output its media judgement result to the reproduction control section 106, if the WM1 data is added to the digital music data inputted from the disk media reading section 101 and the semiconductor memory media reading section 102.

The WM1 detecting section 104 detects the WM1 data from the digital music data inputted from the disk media reading section 101 and the semiconductor memory media reading section 102, and outputs the digital music data after the detection process to the WM2 detecting section 105, as well as outputting its WM1 data detection result to the reproduction control section 106.

The WM2 detecting section 105 detects the WM2 data from the digital music data inputted from the WM1 detecting section 104, and outputs the digital music data after the detection process to the WM2 adding section 107, as well as outputting its WM2 data detection result to the reproduction control section 106.

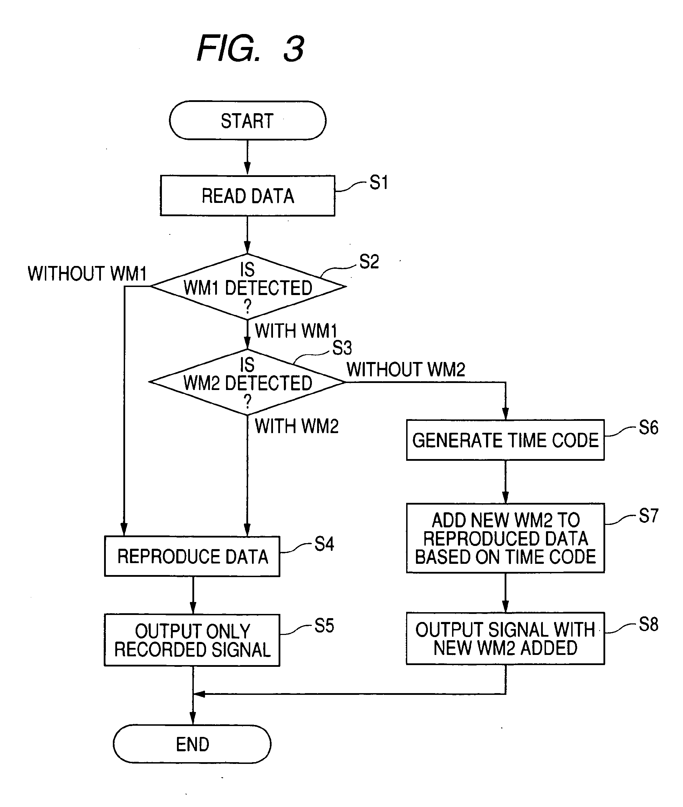

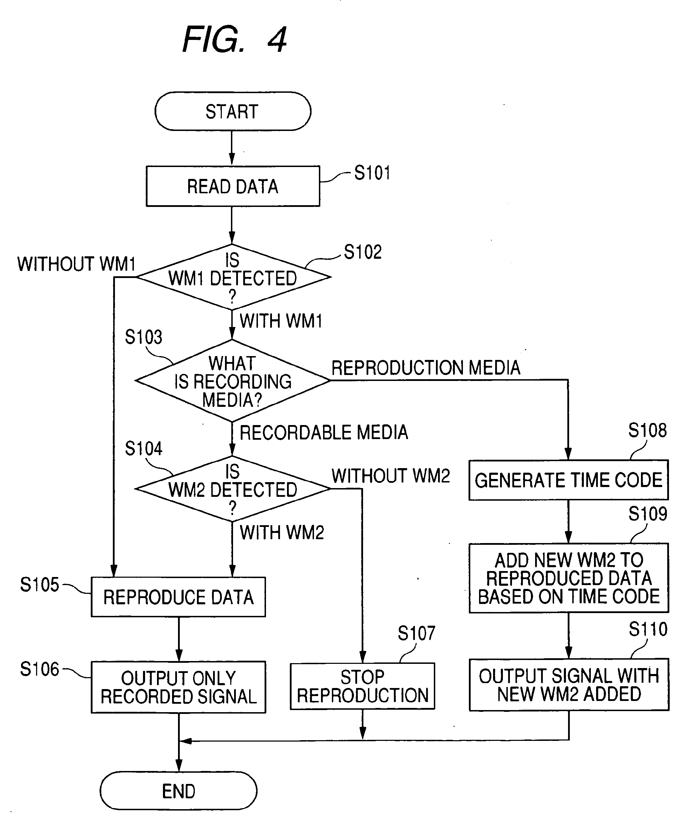

The reproduction control section 106 performs a data reproduction process 1 (see Figure 3) and a data reproduction process 2 (see Figure 4) as will be described later, based on, the media judgement result inputted from the media judging section 103, the WM1 data detection result inputted from the WM1 detecting section 104 and the WM2 data detection result inputted from the WM2 detecting section 105.

In the data reproduction process 1 of Figure 3, if the WM1 detecting section 104 does not detect the WM1 data from the data read from the disk media by the disk media reading section 101 or the data read from the semiconductor memory media by the semiconductor memory media reading section 102, the content does not require the copyright protection of the invention, whereby the read digital music data is decoded and reproduced to output a digital reproduction signal from a digital output terminal T1, or output an analog reproduction signal after analog conversion from an analog output terminal T2.

Also, if the WM1 data is detected from the read data, the second and third bits are "10" indicating that the first generation is recordable, the content detected by the media judging section 103 is recording type media, and further the WM2 data is detected by the WM2 detecting section 105, it is discriminated that the content has been once normally recorded, whereby the reproduction control section 106 decodes and reproduces the read digital music data without excluding it, and outputs a digital reproduction signal including the recorded WM2 data directly from the digital output terminal T1, or an analog reproduction signal after analog conversion from the analog output terminal T2.

Also, if the WM1 data is detected from the read data, its second and third bits are "10" indicating that the first generation is recordable, the content detected by the media judging section 103 is reproduction type media, and further the WM2 data is not detected by the WM2 detecting section 105, it is discriminated that the content is trade content insisting the normal copyright protection corresponding to the invention, whereby the reproduction control section 106 adds the time code generated from the time code generator 108, as the new WM2 data, to the digital reproduction signal reproduced by decoding the read digital music data, and outputs a digital reproduction signal with the new WM2 data added from the digital output terminal T1, or an analog reproduction signal after analog conversion from the analog output terminal T2.

Also, if the WM1 data is detected from the read data, the media judging section 103 detects that the media is recordable media, and the WM2 detecting section 105 does not detect the WM2 data, the reproduction control section 106 judges that the media is illegally recorded media, and stops the reproduction of read digital music data.

Also, if the WM1 data is detected from the read data, and the media judging section 103 detects that the media is reproduction type media, the reproduction control section 106, judging that the media is original trade disk requesting the recording protection, adds the time code generated from the time code generator 108, as the new WM2 data, to the digital reproduction signal reproduced by decoding the read digital music data, and outputs the digital reproduction signal with the new WM2 data added from the digital output terminal T1, or only an analog reproduction signal after analog conversion from the analog output terminal T2.

The WM2 adding section 107 adds the time code (see the bit configuration of Table 3) inputted from the time code generator 108, as the new WM2 data, to the digital music data after the WM2 data detection process inputted from the WM2 detecting section 105 in accordance with an adding instruction of the WM2 data inputted from the reproduction control section 105, and outputs it to the DA converter 108 and the digital terminal T1.

The time code generator 108 clocks the year/month/day, and outputs the clocked time information as the time code (see the bit configuration of Table 3) to the WM2 adding section 107. The DA converter 109 converts the digital music data inputted from the WM2 adding section 107 into analog form and outputs an analog reproduction signal to the analog output terminal T2.

As shown in Figure 2, the data recording device 2 comprises a WM1 detecting section 201, a WM2 detecting section 202, a time code comparator 203, a time code generator 204, a recording control section 206, a disk media recording section 210 and a semiconductor memory media recording section 211.

The WM1 detecting section 201 digitizes an analog music signal inputted from an analog input terminal, not shown, detects the WM1 data from the digital music data, or detects the WM1 data from the digital music data inputted from a digital input terminal, not shown, and outputs the digital music data after the detection process to the WM2 detecting section 202, as well as outputting the WM1 data detection result to the recording control section 206.

The WM2 detecting section 202 detects the WM2 data from the digital music data inputted from the WM1 detecting section 201, and outputs the digital music data after the detection process to the disk media recording section 210 and the semiconductor memory media recording section 211, as well as outputting the WM2 data detection result to the recording control section 206 and the time code comparator 203.

The time code comparator 203 compares the time code contained in the WM2 data inputted from the WM2 detecting section 202 and the time code inputted from the time code generator 204, and outputs the comparison result to the recording control section 206.

The time code generator 204 clocks the year, month and day, and outputs the clocked time information as the time code (see the bit configuration of Table 3) to the time code comparator 203 and the recording control section 206.

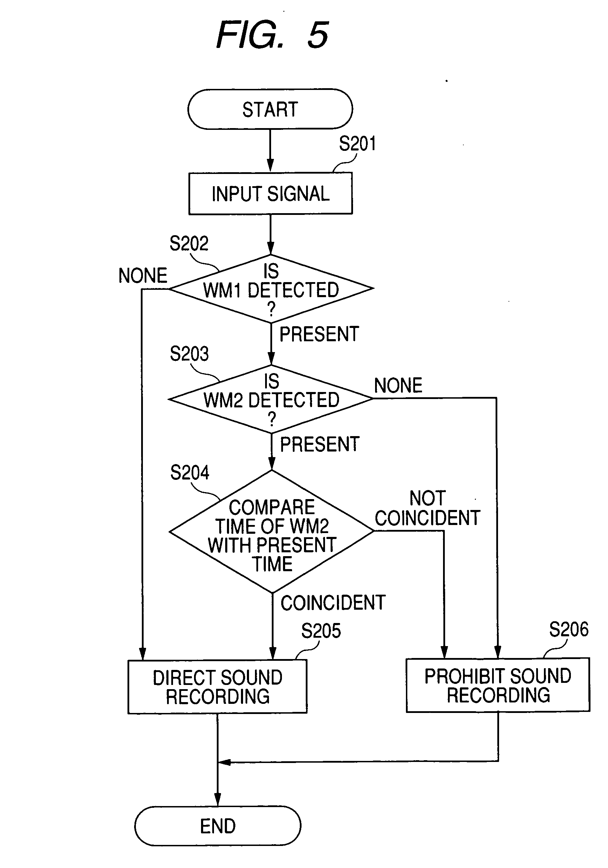

The recording control section 206 controls the disk media recording section 210 and the semiconductor memory media recording section 211 to record the digital music data in the disk media and the semiconductor memory media by performing a data recording process (see Figure 5) as will be described later, based on the WM1 data detection result inputted from the WM1 detecting section 201, the WM2 data detection result inputted from the WM2 detecting section 202, and the time code comparison result inputted from the time code comparator 203.

The recording control section 206 controls the disk media recording section 210 to record the digital music data directly in the disk media, or the semiconductor memory media recording section 211 to record it in the semiconductor memory media, judging the content to be copy free, if the WM1 data is not detected by the WM1 detecting section 201.

Also, the recording control section 206 controls the disk media recording section 210 to record the digital music data directly in the disk media, or the semiconductor memory media recording section 211 to record it in the semiconductor memory media, judging that the original trade disk of the digital music data is reproduced, if the WM1 data is detected by the WM1 detecting section 201, the WM2 data is detected by the WM2 detecting section 202, and the comparison result of the time code (year/month/day data) by the time code comparator 203 is consistent with the present time.

Also, the recording control section 206 prohibits the recording of the input digital music data, judging that the already recorded content is outputted, if the WM1 data is detected by the WM1 detecting section 201, the WM2 data is detected by the WM2 detecting section 202, and the comparison result of the time code (year/month/day data) by the time code comparator 203 is inconsistent with the present time.

Also, the recording control section 206 prohibits the recording of the input digital music data, judging that the digital music data is reproduced by the device not coping with the protection system of the invention, or recorded by the device not coping with the protection system of the invention, if the WM1 data is detected by the WM1 detecting section 201, and the WM2 data is not detected by the WM2 detecting section 202.

The disk media recording section 210 records the digital music data inputted from the WM2 detecting section 202 in the disk media in accordance with a recording control signal inputted from the recording control section 206.

The semiconductor memory media recording section 211 records the digital music data inputted from the WM2 detecting section 202 in the semiconductor memory media in accordance with a recording control signal inputted from the recording control section 206.

The operation of this embodiment will be described below.

Referring to a flowchart of Figure 3, first of all, the data reproduction process 1 performed by the reproduction control section 106 of the data reproduction device 1 will be described below.

In this data reproduction process 1, the reproduction control section 106 controls the reproduction of the digital music data read from the disk media or semiconductor memory media, based on the detected WM1 data and WM2 data, in an example where no judgement for the illegally recorded media is made based on the media judgement result.

In Figure 3, the reproduction control section 106 firstly discriminates whether or not the WM1 data is detected by the WM1 detecting section 104 based on the data read from the disk media by the disk media reading section 101, or the data read from the semiconductor memory media by the semiconductor memory media reading section 102 (steps S1, S2).

If the WM1 data is not detected by the WM1 detecting section 104, the reproduction control section 106 decodes and reproduces the read digital music data, and outputs only a digital reproduction signal from the digital output terminal T1, or only an analog reproduction signal after analog conversion from the analog output terminal T2 (steps S4, S5).

Also, if the WM1 data is detected from the read data, the reproduction control section 106 further discriminates whether or not the WM2 data is detected by the WM2 detecting section 105 (step S3).

If the WM2 data is detected by the WM2 detecting section 105, the reproduction control section 106 decodes and reproduces the read digital music data, and outputs only a digital reproduction signal, from the digital output terminal T1, or only an analog reproduction signal after analog conversion from the analog output terminal T2 (steps S4, S5).

Also, if the WM1 data is detected from the read data, and the WM2 data is not detected by the WM2 detecting section 105, the reproduction control section 106 controls the WM2 adding section 206 to add the time code generated by the time code generator 108, as the new WM2 data, to the digital reproduction signal reproduced by decoding the read digital music data (steps S6, S7), and outputs only a digital reproduction signal with the new WM2 data added from the digital output terminal T1, or only an analog reproduction signal after analog conversion from the analog output terminal T2 (step S8).

Next, referring to a flowchart of Figure 4, the data reproduction process 2 performed by the reproduction control section 106 of the data reproduction device 1 will be described below.

In this data reproduction process 2, the reproduction control section 106 controls the reproduction of the digital music data read from the disk media or semiconductor memory media, based on and the result of judging whether or not to add the WM2 to the reproduction data, as well as judging whether or not the reproduction media is the recording media coping with the protection system of the invention from the media judgment result and the detected WM1 data and WM2 data.

In Figure 4, the reproduction control section 106 firstly discriminates whether or not the WM1 data is detected by the WM1 detecting section 104 based on the data read from the disk media by the disk media reading section 101, or the data read from the semiconductor memory media by the semiconductor memory media reading section 102 (steps S101, S102).

If the WM1 data is not detected by the WM1 detecting section 104, the reproduction control section 106 judges that the content does not require the copyright protection, decodes and reproduces the read digital music data, and outputs a digital reproduction signal from the digital output terminal T1, or an analog reproduction signal after analog conversion from the analog output terminal T2 (steps S105, S106).

Also, if the WM1 data.is detected from the read data, the reproduction control section 106 further controls the media judging section 103 to judge whether or not the media is recording type media (step S103). If it is judged that the media is recording type media, the reproduction control section 106 further discriminates whether or not the WM2 data is detected by the WM2 detecting section 105 (step S104).

If the WM2 data is detected, the reproduction control section 106 judges that the media is normal recording media, decodes and reproduces the read digital music data, and outputs a digital reproduction signal from the digital output terminal T1, or an analog reproduction signal after analog conversion from the analog output terminal T2 (steps S105, S106).

Also, if the WM1 data is detected from the read data, the media judging section 103 judges that the media is recording type media, and the WM2 data is not detected by the WM2 detecting section 105 (steps S102, S103, S104), the reproduction control section 106 judges that the media is illegally recorded media, and stops the reproduction of the read digital music data (step S107).

Also, if the WM1 data is detected from the read data and the media judging section 103 judges that the media is reproduction type media (steps S102, S103), the reproduction control section 106 adds the time code generated by the time code generator 108, as the new WM2 data, to the digital reproduction signal reproduced by decoding the read digital music data (steps S108, S109), and outputs the digital reproduction signal with the new WM2 data added from the digital output terminal T1, or an analog reproduction signal after analog conversion from the analog output terminal T2 (step S110).

As described above, in this embodiment, two kinds of WM (Watermark) data, the WM1 data and the WM2 data are prepared to be embedded into the input digital music data. For the WM1 data of 8 bits, data representing that the content data is package media data or distribution data, SCMS information, data representing that the media is the disk media or the semiconductor memory media, and the kind of disk media or semiconductor media are set. For the WM2 data of 17 bits, the year/month/day is set as time information representing the distribution time or recording time.

And the disk reproduction device 1 controls the reproduction of digital record data recorded in the disk media or the semiconductor memory media, based on the WM1 data and the WM2 data, whereby the data reproducing device controls reproduction most suitably as copyright holder's intention for the digital music data recorded in each media in accordance with the following conditions ① to ④ regarding the package media.

Condition ①: trade content requiring the copyright protection of the original.

To this content, the WM1 data is added, but the WM2 data is not added.

In this case, the data reproducing device 1 decodes and reproduces the digital music data read from the media, and outputs the reproduced data by adding the new WM2 data in which the time code is set to the reproduced data.

Accordingly, since the trade media is reproduced and the content with the WM2 data newly added is output to its output destination, the WM2 data is recorded together with the music data in the recording media, whatever data recording device the output destination is. Therefore, the once recorded media has the recording time added as WM2.

If the once recorded media is reproduced and recorded again, it is judged that the input data is the once recorded content due to the presence of the WM2 in the case of a recording device coping with the protection system of the invention, whereby two or more copies of the trade content requiring the copyright protection of the original are restricted.

Condition ②: WM1 data and WM2 data are added to the normally recorded media corresponding to the protection system of the invention.

In this case, the data reproducing device 1 decodes the digital music data read from the recorded media recorded corresponding to the protection system of the invention, and directly reproduces it without changing or newly adding the WM2.

Accordingly, if the recording media corresponding to the protection system of the invention is reproduced and its output destination is the data recording device coping with the protection system of the invention, it is judged that the reproduced data is the once recorded content due to the presence of the WM2, whereby the second copy of the reproduced data is restricted.

Condition ③: in the case of the media recorded by the device not coping with the protection system of the invention, the WM1 data is added, but the WM2 data is not added irrespective of the recording type media.

In this case, the data reproducing device 1 stops the reproduction of the digital music data read from the media recorded by the device not coping with the protection system of the invention.

Accordingly, the reproduction of the media recorded by the device not coping with the protection system of the invention is restricted.

Condition ④: in the case of the copy free media, the WM1 and WM2 data are not added at all.

In this case, the data reproducing device 1 decodes the digital music data read from the media and directly reproduces it.

Accordingly, the copy free reproduction media or recordable media can be reproduced.

Next, referring to a flowchart of Figure 5, the data recording process performed by the recording control section 206 of the data recording device 2 will be described below.

In this data recording process, the recording control section 206 controls the disk media recording section 210 and the semiconductor memory media recording section 211 to record the digital music data in the disk media and the semiconductor memory media, based on the WM1 data detection result inputted from the WM1 detecting section 201, the WM2 data detection result inputted from the WM2 detecting section 202, the time code comparison result inputted from the time code comparator 203, and the mutual authentication result inputted from the mutual authentication/decoding section 205.

In Figure 5, the recording control section 206 firstly inputs the WM1 data detection result from the input music signal or digital music data by the WM1 detecting section 201 (step S201).

The recording control section 206 discriminates whether or not the WM1 data is detected by the WM1 detecting section 201 (step S202). If the WM1 data is not detected, the recording control section 206 judges that the content is copy free, and controls the disk media recording section 210 to directly record the digital music data in the disk media, or the semiconductor memory media recording section 211 to record it in the semiconductor memory media (step S205).

Also, if the WM1 data is detected by the WM1 detecting section 201 (step S202), the recording control section 206 discriminates whether or not the WM2 data is detected by the WM2 detecting section 202 (step S203).

If the WM2 data is detected, the recording control section 206 checks whether the time code comparison result (comparison result between the time code (year/month/day data) of the present time generated from the time code generator 203 and the time code (year/month/day data) contained in the detected WM2 data) is matched or unmatched (step S204). If the WM2 data is matched with the present time, it is judged that the trade original disk with the input music signal is reproduced at present by the reproduction device coping with the protection system of the invention, whereby the recording control section 206 controls the disk media recording section 210 to record the digital music data, together with the WM2 data indicating the present time, in the disk media, or the semiconductor memory media recording section 211 to record it in the semiconductor memory media (step S205).

Also, if the WM1 data is detected by the WM1 detecting section 201 (step S202), the WM2 data is detected by the WM2 detecting section 202 (step S203), and the comparison result of the time code (year/month/day data) by the time code comparator 203 is unmatched with the present time (step S204), the recording control section 206 prohibits the recording of input digital music data not to make the unpermitted recording, because it is judged that the content is already recorded before, or distributed via the network (step S206).

Also, if the WM1 data is detected by the WM1 detecting section 201 (step S202), and the WM2 data is not detected by the WM2 detecting section 202 (step S203), the recording control section 206 stops the recording of input digital music data for the protection of the content, because it is judged that the signal is provided from the reproduction device not coping with the protection system of the invention (step S206).

As described above, the recording control section 206 of the data recording device 2 according to this embodiment controls the disk media recording section 210 and the semiconductor memory media recording section 211 to record the digital music data in the disk media and the semiconductor memory media, based on the WM1 data detection result inputted from the WM1 detecting section 201, the WM2 data detection result inputted from the WM2 detecting section 202, and the time code comparison result inputted from the time code comparator 203. Therefore, the data reproduction device controls the recording most suitably as copyright holder's intention for the music signal or digital music data inputted from each media, corresponding to the conditions P① to P④ regarding the package media and the conditions N① to N④ regarding the broadcasting distribution media as follows.

Condition P①: in the case of digital music data or music signal reproduced from the original trade media by the normal data reproduction device, the WM1 data and the WM2 data are added (reproducing time for WM2 = present time).

If this signal is inputted, the data recording device 2 judges that the data corresponds to the protection system of the invention, encodes the input digital music data or music signal and directly records it in the disk media or the semiconductor memory media.

Accordingly, corresponding to the original recording media, the first generation recording of the reproduction signal is performed and the subsequent second generation illegal copy is restricted.

Condition P(2): when the trade original media recorded corresponding to the protection system of the invention is reproduced by the data reproduction device coping with the protection system of the invention, the WM1 data and the WM2 data are added to the digital music data or music signal to be reproduced. In this case, the WM2 data indicates the past time, which is unmatched with the present time.

When such a signal is inputted, the data recording device 2 judges that this input signal is already recorded in the first generation, or the content is distributed via the network, and may stop the recording by the recording device, if the rightful person desires to exclude it.

Condition P③: WM1 data is added to the digital music data or music signal reproduced by the data reproduction device not coping with the protection system of the invention, but the WM2 data is not added.

When such a signal is inputted, the data recording device 2 judges that this input signal is inputted from the reproduction device not coping with the protection system of the invention, and stops the recording of input digital music data or music signal for the copyright protection.

Accordingly, when the copyright holder adopts the protection system of the invention, the use of the reproduction device without regard for the right can be restricted.

Condition P④: when the copy free media is reproduced, the WM1 and WM2 data are not added.

When such a signal is inputted, the data recording device 2 directly records the input digital music data or music signal.

Accordingly, the copy free content can be not only freely reproduced but also freely recorded.

Condition N①: WM1 and WM2 data representing the broadcasting time are added to the broadcast content for which the copyright protection is asked. If the data is received by a tuner, the WM1 data and the WM2 data are added to its output (present time information).

Condition N②: when the content is broadcast without restriction of copy, WM1 and WM2 data are not added for broadcasting. As a matter of fact, the WM1 and WM2 data are not added to the output of the tuner receiving the data.

The condition N① corresponds to the output of the reproduction device coping with the protection system of the invention that reproduces the trade original media. The condition N② corresponds to the case where copy free content is reproduced.

Therefore, the sound recording device coping with the protection system of the invention allows the recording for time shift, but prevents the recording of the second generation to record the data again.

The time code generator 108 of the embodiment may set the time clock only when the data reproduction device 1 is manufactured. Also, the time code generator 108 may generate the time code by clocking the world standard time. Also, the time code generator 108 clocks the year/month/day, but may further clock the time/minute/second.

Also, the time code generator 204 of the embodiment may set the time clock only when the data recording device 2 is manufactured. Also, the time code generator 204 may generate the time code by clocking the world standard time. Also, the time code generator 204 clocks the year/month/day, but may further clock the time/minute/second.

Moreover, the time code generator 108 and the time code generator 204 may impose a restriction on the settable number of time clock, if the user can set the time clock.

Moreover, the WM2 adding section 107. may add the time code including year/month/day and time/minute/second that are inputted from the time code generator 108, as the WM2 data. Further, the WM2 adding section 208 may add the time code including year/month/day and time/minute/second that are inputted from the time code generator 204, as the WM2 data.

The control for broadcasting or distributing the content may be made in accordance with the flowchart of Figure 3, for instance, in which the WM2- data is added to the content to be broadcast or distributed. That is, if the provider of the content adds the WM2 data in accordance with the providing timing, the broadcaster or distributor only needs to directly reproduce data. Also, if the addition of WM2 data is entrusted to the broadcaster or distributor, the broadcaster or distributor may add the WM2 data at the broadcasting or distributing timing. Thereby, the terminal directly receiving the broadcast or distributed data can record the content if the time information of clocking means and the WM2 data are matched. Also, when the received content is redistributed, the terminal receiving the redistributed content can not record the contents data if the WM2 data contained in the content and the time information clocked by the clocking means are unmatched. Thereby, the unlimited copies are prevented.

With this invention, the reproduction time is written in the reproduced content. When the person tries to directly record the content with the recording device, this invention makes it possible to record the content as conventionally (as the recording of the first generation).

However, in the case where the reproduced content is distributed via the network, if the data is once recorded in an HDD in the PC, and uploaded from a home page to an FTP site, for instance, the time is quite different from the reproduction time, when the data is downloaded and recorded. In this invention, since the time code of WM2 is different from the recording time, the recording is automatically prohibited. That is, the network distributed data is just the same as the recorded data for one generation, and excluded by a function of preventing the recording for the second generation.

Therefore, the illegal distribution via the network can be substantially prevented by prohibiting the recording of this data.

This is the same when any data is distributed via the network, but made because the processing time only is different.

## Claims

1. A digital watermark information adding device having digital watermark information adding means for adding digital watermark information to broadcast content data, wherein said digital watermark information adding means adds time information representing the broadcasting time of said content data as digital watermark information to said content data to judge whether or not a terminal receiving said content data can record the content data.

2. A digital watermark information adding device having digital watermark information adding means for adding digital watermark information to broadcast content data, wherein if said content data is redistributed via a network, said digital watermark information adding means adds time information representing the broadcasting time of said content data as digital watermark information to said content data, to allow a terminal receiving the content data to judge whether or not the received content data is the content data permitted to record, or the normal content data.

3. The digital watermark information adding device according to claim 1 or 2, wherein said digital watermark information adding means adds digital watermark information representing that the content insists the copyright to said content data.

4. The digital watermark information adding device according to claim 1, wherein said digital watermark information adding means adds digital watermark information representing whether or not the broadcast content data is permitted to be distributed via a communication line.

5. A data reproduction device for reproducing content data recorded in a recording medium, comprising:
time information presence or absence discrimination means for discriminating whether or not time information is added to said recording medium;
recording medium type discrimination means for discriminating whether said recording medium is read-only recording medium or recordable recording medium;
clocking means for clocking the present time;
time information adding means for adding time information clocked by said clocking means to the reproduced content data; and
output means for outputting the content data;
wherein if said time information presence or absence discrimination means discriminates that the time information is not recorded, and said recording medium type discrimination means discriminates that the recording medium is read-only recording medium, the time information clocked by said clocking means is added to the reproduced content data and the content data is outputted from said output means.

6. The data reproduction device according to claim 5, further comprising copyright insistence information discrimination means for discriminating whether or not the information representing the insistence of the copyright or other equivalent information is added to said content data, wherein if said time information presence or absence discrimination means discriminates that the time information is not recorded, said recording medium type discrimination means discriminates that the recording medium is read-only recording medium, and said copyright insistence information discrimination means discriminates that the information representing the insistence of the copyright is not added, the time information is not added to the reproduced content data and the content data is outputted from said output means.

7. The data reproduction device according to claim 5, wherein if said time information presence or absence discrimination means discriminates that the time information is not recorded, and said recording medium type discrimination means discriminates that the recording medium is recordable recording medium, the time information is not added to the reproduced content data and the content data is outputted from said output means.

8. The data reproduction device according to claim 5, further comprising copyright insistence information discrimination means for discriminating whether or not the information representing the insistence of the copyright or other equivalent information is added to said content data, wherein if said time information presence or absence discrimination means discriminates that the time information is not recorded, said recording medium type discrimination means discriminates that the recording medium is read-only recording medium, and said copyright insistence information discrimination means discriminates that the information representing the insistence of the copyright or other equivalent information is added, the time information clocked by said clocking means is added to the reproduced content data and the content data is outputted from said output means.

9. The data reproduction device according to claim . 5, further comprising copyright insistence information discrimination means for discriminating whether or not the information representing the insistence of the copyright or other equivalent information is added to said content data, wherein if said time information presence or absence discrimination means discriminates that the time information is not recorded, said recording medium type discrimination means discriminates that the recording medium is recordable recording medium, and said copyright insistence information discrimination means discriminates that the information representing the insistence of the copyright is added, the reproduction of the content data is prohibited.

10. The data reproduction device according to claim 5, further comprising copyright insistence information discrimination means for discriminating whether or not the information representing the insistence of the copyright or other equivalent information is added to said content data, wherein if said time information presence or absence discrimination means discriminates that the time information is not recorded, said recording medium type discrimination means discriminates that the recording medium is recordable recording medium, and said copyright insistence information discrimination means discriminates that the information representing the insistence of the copyright is not added, the time information is not added to the reproduced content data and the content data is outputted from said output means.

11. The data reproduction device according to claim 5, wherein if said time information presence or absence discrimination means discriminates that the time information is recorded, the time information is not added to the reproduced content data and the content data is outputted from said output means.

12. The data reproduction device according to claim 5, wherein said time information is added as digital watermark information.

13. The data reproduction device according to claim 5, wherein the information representing the insistence of the copyright or other equivalent information is added as digital watermark information.

14. The data reproduction device according to claim 5, wherein said clocking means clocks the year, month and day, and said time information includes only the year, month and day.

15. The data reproduction device according to claim 5, wherein said time information adding means adds said year, month and day to said reproduced content data in the order of day, month and year.

16. The data reproduction device according to claim 5, wherein said clocking means imposes a restriction on the settable number of time clock.

17. A data recording device for recording the input content data, comprising:
time information identification means for identifying the time information added to said content data;
clocking means for clocking the present time; and
recording means for recording said content data in a recording medium;
wherein if it is discriminated that the time information is added to said content data, and the time information identified by said time information identification means and the present time clocked by said clocking means are matched within a predetermined range, the input content data is recorded in said recording medium.

18. The data recording device according to claim 17, wherein if it is discriminated that the time information is added to said content data, and the identified time information and the present time clocked by said clocking means are unmatched within a predetermined range, recording the input content data in said recording medium is prohibited.

19. The data recording device according to claim 17, further comprising copyright insistence information discrimination means for discriminating whether or not the information representing the insistence of the copyright or other equivalent information is added to said content data, wherein if it is discriminated that the time information is not added to said content data, and it is discriminated that the information representing the insistence of the copyright or other equivalent information is added, recording the input content data in said recording medium is prohibited.

20. The data recording device according to claim 17, further comprising copyright insistence information discrimination means for discriminating whether or not the information representing the insistence of the copyright or other equivalent information is added to said content data, wherein if it is discriminated that the time information is not added to said content data, and it is discriminated that the information representing the insistence of the copyright or other equivalent information is not added, the input content data is recorded in said recording medium.

21. The data recording device according to claim 17, wherein said time information is added as digital watermark information.

22. The data recording device according to claim 17, wherein the information representing the insistence of the copyright or other equivalent information is added as digital watermark information.

23. The data recording device according to claim 17, wherein said clocking means is able to set the time clock only when said data recording device is manufactured.

24. The data recording device according to claim 17, wherein said clocking means clocks the year, month and day, and said time information includes only the year, month and day.

25. The data recording device according to claim 17, wherein) said clocking means imposes a restriction on the settable number of time clock.
